# EUROPEAN PATENT APPLICATION

(11) **EP 1 507 241 A1**
(43) Date of publication of application: **16.02.2005**
(21) Application number: 04254694.5
(22) Date of filing: 05.08.2004
(51) Int. Cl.: G07F 19/00, G06F 17/60

(54) **Method of consolidating remotely captured cheque image data and a consolidation server therefor**

(30) Priority: 11.08.2003 US 638607
(71) Applicant: NCR International, Inc., Dayton, Ohio 45479 (US)
(72) Inventor: Latimer, Paul J., Waterloo, Ontario N2L 6A3 (CA); Ancell, Michael, Kitchener, Ontario (CA); Elwin, David, Burnhead of Auchterhouse DD3 0QN (GB); Shannon, Joseph J., Beavercreek, Ohio 45440 (US); Shamanski, Kevin S., Kitchener, Ontario N2N 3N7 (CA)
(74) Representative: Williamson, Brian

(57) **Abstract**

A consolidation server consolidates cheque image data from a plurality of self-service terminals. The consolidation server receives cheque image data from each of the plurality of terminals. The cheque image data received from the plurality of terminals is staged in a data storage medium. Cheque image data associated with at least one of the plurality of terminals is consolidated when a trigger event occurs. The consolidated cheque image data is sent to an image-based cheque processing system for further processing. The plurality of self-service terminals may comprise a plurality of automated teller machines. The plurality of automated teller machines may comprise a plurality of cheque depositing automated teller machines.

## Description

The present invention relates to cheque image data processing, and is particularly directed to a method of consolidating remotely-captured cheque image data captured at a self-service terminal, such as a cheque depositing automated teller machine (ATM), and a consolidation server therefor.

A cheque depositing ATM allows a user to deposit a cheque in a public access, unattended environment. To deposit a cheque, a user inserts a user identification card through a user card slot at the cheque depositing ATM, enters the amount of the cheque being deposited, and inserts a cheque to be deposited through a cheque slot. A cheque transport mechanism receives the entered cheque and transports the cheque in a forward direction along a cheque transport path to a number of locations within the ATM to process the cheque. If the cheque is not accepted for deposit, the cheque is returned to the user via the cheque slot. If the cheque is accepted for deposit, the amount of the cheque is deposited into the user's account and the cheque is transported to and stored in a storage bin within the ATM. An endorser printer prints an endorsement onto the cheque as the cheque is being transported to the storage bin.

Cheques in the storage bin within the ATM are periodically picked up and physically transported via courier to a back office facility of a financial institution. At the back office facility, the cheques are prepared at a document preparation workstation for subsequent processing in an image-based cheque processing system located at the back office facility. In a first pass of cheques through the image-based check processing system, cheque image data which is representative of images of the cheques is captured. Then in a second pass of cheques through an image-based cheque processing system, the cheques are encoded and sorted and matched up with their corresponding cheque image data which was previously captured during the first pass of cheques. The second pass of cheques may be made through either the same image-based cheque processing system that the first pass of cheques was made or a different image-based cheque processing system. Cheques are processed in the first and second passes through the image-based cheque processing system(s) for purpose of clearing cheques between financial institutions, as is known.

As an alternative to capturing cheque image data in a first pass of cheques through an image-based cheque processing system located at the back office facility (which requires the cheques to be physically transported from the ATM to the back office facility before the first pass of cheques can be performed), proposals have been made to remotely capture cheque image data at the cheque depositing ATM. After cheque image data is captured in a "first pass" of cheques through the cheque depositing ATM, the remotely-captured cheque image data is sent electronically to the back office facility. At a later time, the cheques are picked up and physically transported via courier to the back office facility. Then, in a "second pass" of cheques through an image-based cheque processing system located at the back office facility, the cheques are encoded, sorted, and matched up with their corresponding cheque image data which was previously captured at the cheque depositing ATM and sent electronically to the back office facility.

Typically, the financial institution owning or operating the cheque depositing ATM also owns or operates a network of cheque depositing ATMs. The same financial institution usually owns or operates the back office facility at which previously-captured cheque image data from the cheque depositing ATMs is processed. It would be desirable for the financial institution owning or operating the back office facility to be able to effectively and efficiently process cheque image data which was previously captured remotely in a "first pass" of cheques through the cheque depositing ATMs so that the remotely-captured cheque image data can be subsequently processed in a "second pass" of cheques through an image-based cheque processing system located at the back office facility.

According to a first aspect of the present invention there is provided a consolidation server for consolidating cheque image data from a plurality of self-service terminals, the consolidation server comprising: means for receiving cheque image data from each of the plurality of terminals; means for staging the cheque image data received from the plurality of terminals in a data storage medium; trigger means for providing a trigger signal indicative of occurrence of a trigger event; means for consolidating cheque image data associated with at least one of the plurality of terminals when the trigger signal is provided; and means for sending the consolidated cheque image data to an image-based cheque processing system for further processing.

According to a second aspect of the present invention there is provided a method of processing cheque image data, the method comprising: (a) receiving cheque image data from each of a plurality of self-service terminals; (b) staging cheque image data received from the plurality of terminals in a data storage medium; (c) consolidating the cheque image data staged in the data storage medium for at least one terminal when a trigger event occurs; and (d) sending the consolidated cheque image data to an image-based cheque processing system for further processing.

According to a third aspect of the present invention there is provided a cheque consolidation network comprising a plurality of self-service terminals, an image-based cheque processing system; and a consolidation server for (i) receiving cheque image data from each of the plurality of terminals, (ii) staging cheque image data received from the plurality of terminals in a data storage medium, (iii) consolidating the cheque image data staged in the data storage medium for at least one terminal when a trigger event occurs, and (iv) sending the consolidated cheque image data to the image-based cheque processing system for further processing.

In accordance with one aspect of the present invention, a consolidation server is provided for consolidating cheque image data from a plurality of self-service terminals. The consolidation server comprises means for receiving cheque image data from each of the plurality of terminals, means for staging the cheque image data received from the plurality of terminals in a data storage medium, trigger means for providing a trigger signal indicative of occurrence of a trigger event, means for consolidating cheque image data associated with at least one of the plurality of terminals when the trigger signal is provided, and means for sending the consolidated cheque image data to an image-based cheque processing system for further processing.

There are a number of ways to provide the trigger signal indicative of the trigger event. The trigger means may provide the trigger signal indicative of the trigger event when a predetermined number of transactions has been received from the plurality of terminals. The trigger means may provide the trigger signal indicative of the trigger event when a predetermined number of transactions has been received from at least one of the plurality of terminals. The trigger means may provide the trigger signal indicative of the trigger event when a predetermined time occurs. The trigger means may provide the trigger signal indicative of the trigger event when a predetermined amount of time has elapsed. The trigger means may provide the trigger signal which is indicative of a storage bin at one of the plurality of terminals having been emptied by a courier.

In accordance with another aspect of the present invention, a method of processing cheque image data comprises the steps of (a) receiving cheque image data from each of a plurality of self-service terminals, (b) staging cheque image data received from the plurality of terminals in a data storage medium, (c) consolidating the cheque image data staged in the data storage medium for at least one terminal when a trigger event occurs, and (d) sending the consolidated cheque image data to an image-based cheque processing system for further processing. The trigger event may occur when a predetermined number of transactions has been received from the plurality of terminals. The trigger event may occur when a predetermined number of transactions has been received from one of the plurality of terminals. The trigger event may occur when a predetermined time occurs. The trigger event may occur when a predetermined amount of time has elapsed. The trigger event may occur when a storage bin at one of the plurality of terminals is emptied by a courier.

In accordance with yet another aspect of the present invention, an apparatus comprises a plurality of self-service terminals, an image-based cheque processing system, and a consolidation server for (i) receiving cheque image data from each of the plurality of terminals, (ii) staging cheque image data received from the plurality of terminals in a data storage medium, (iii) consolidating the cheque image data staged in the data storage medium for at least one terminal when a trigger event occurs, and (iv) sending the consolidated cheque image data to the image-based cheque processing system for further processing. The plurality of self-service terminals may comprise a plurality of automated teller machines. The plurality of automated teller machines may comprise a plurality of cheque depositing automated teller machines.

Embodiments of the present invention will now be described, by way of example, with reference to the accompanying drawings, in which:
Fig. 1 is a pictorial diagram of a consolidation server interconnecting a network of cheque depositing ATMs and an image-based cheque processing system and embodying the present invention;
Fig. 2 is a pictorial diagram of one of the cheque depositing ATMs shown in Fig. 1;
Fig. 3 is a simplified schematic sectional diagram, taken approximately along line 3-3 in Fig. 2, and showing a part (the cheque processing module) of the ATM of Fig. 2;
Fig. 4 is a block diagram of the cheque-processing module of Fig. 3;
Fig. 5 is a flowchart illustrating steps involved in a cheque depositing operation; and
Fig. 6 is a flowchart illustrating steps involved in a cheque image data consolidating operation.

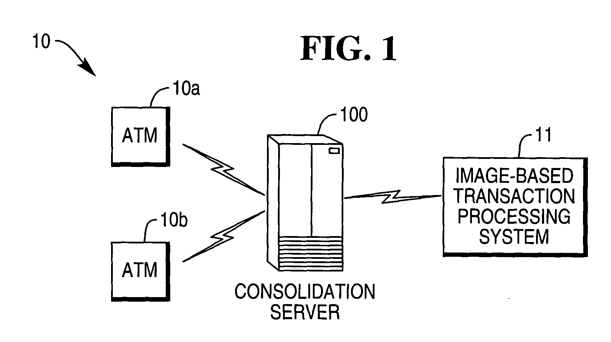

The present invention relates to cheque image data processing, and is particularly directed to a method of consolidating remotely-captured cheque image data captured at a self-service terminal, such as a cheque depositing automated teller machine (ATM), and a consolidation server therefor. As shown in Fig. 1, a network of cheque depositing ATMs 10 (only two shown in Fig. 1 and designated with reference numbers "10a" and "10b") is electronically connected through a consolidation server 100 to a data server of an image-based cheque processing system 11. The image-based cheque processing system 11 may comprise the Model iTRAN 8000 Item Processing System, manufactured by NCR Corporation, located in Dayton, Ohio. Each of the cheque depositing ATMs 10 has similar construction and operation. For simplicity, only the cheque depositing ATM 10a will be described in detail hereinbelow.

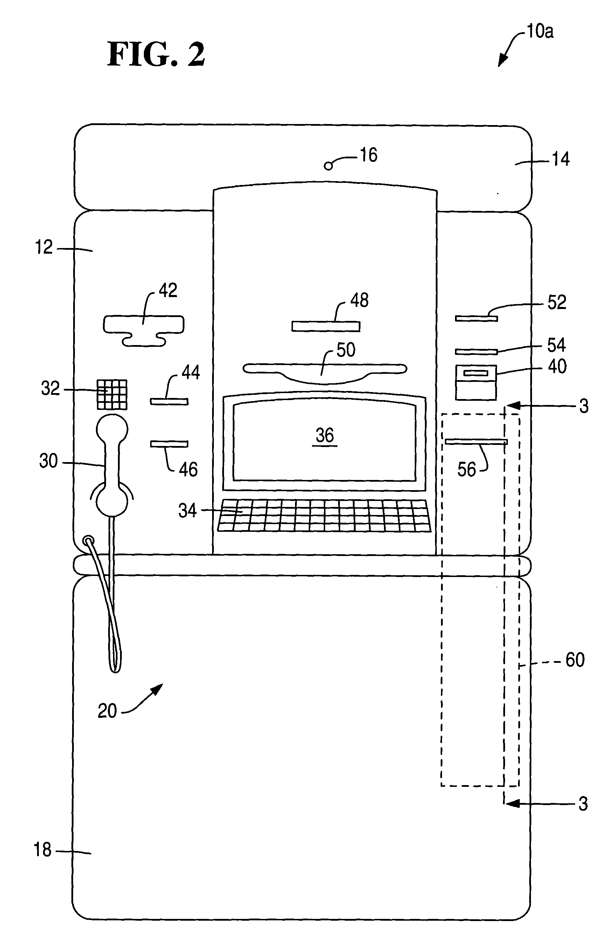

Referring to Fig. 2, the cheque depositing ATM 10a comprises a fascia 12 pivotably coupled to a chassis (not shown); an upper panel 14 mounted to the chassis and defining an aperture 16 through which a camera (not shown) images a user of the ATM 10a; and a lower panel 18 hingeably coupled to the chassis so that the lower panel 18 can be opened to reveal a safe (not shown) mounted in the chassis. When the lower panel 18 is open, the fascia 12 can be pivoted upwards to reveal ATM modules mounted within the chassis.

The fascia 12 and lower panel 18 provide a user interface 20 for allowing a user to execute a transaction. The fascia 12 includes a handset 30 and a telephone keypad 32 for allowing a user to contact a remote operator (not shown) typically located in a call centre (not shown). The fascia 12 also includes an encrypting keyboard 34 for allowing a user to enter transaction details, and a display 36 for presenting screens to a user. The fascia 12 also defines eight slots for receiving and dispensing media items, and a tray 40 into which coins can be dispensed. The slots include: a money order printer slot 42, a bunch note input slot 44, a bunch note exit slot 46, a statement output slot 48, a cash dispense slot 50, a card reader slot 52, a card issue slot 54, and a cheque input/output slot 56. The slots 42 to 56 and tray 40 are arranged so that when the fascia 12 is closed, the slots and tray align with corresponding ATM modules mounted within the ATM's chassis (not shown). The user interface features described above are all provided on an NCR PERSONAS (trade mark) 5878 financial services centre ATM, available from NCR Financial Solutions Group Limited, Discovery Centre, 3 Fulton Road, Dundee, DD2 4SW, Scotland.

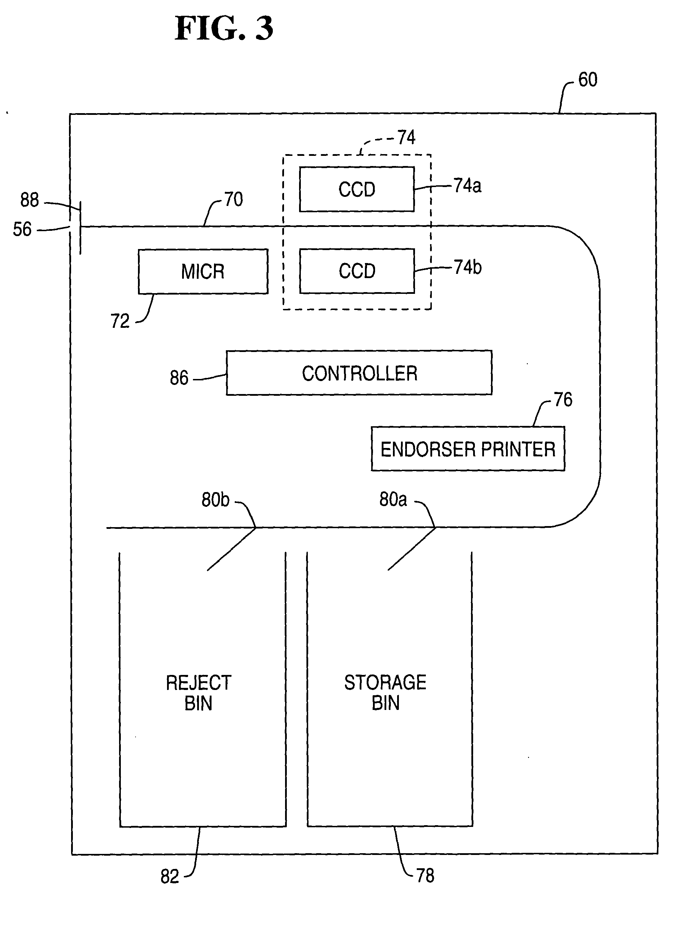

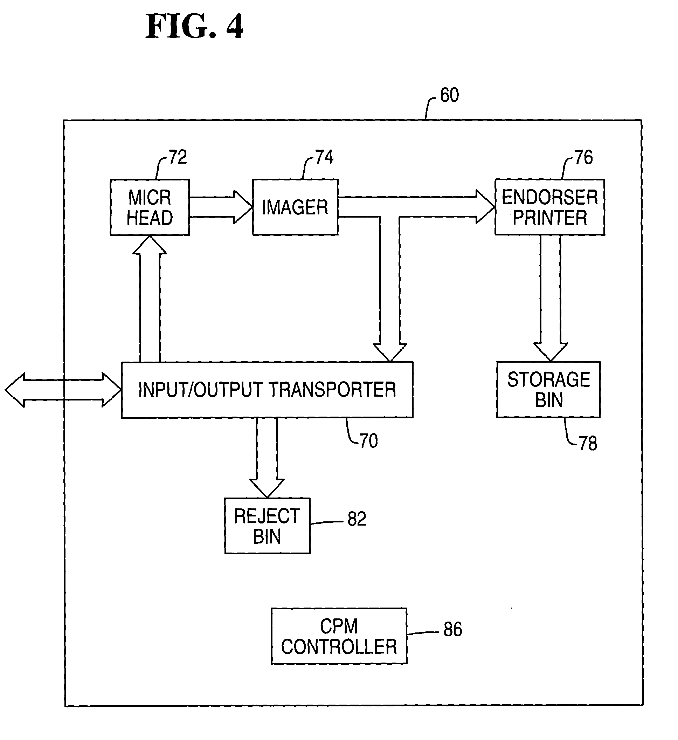

A cheque processing module (CPM) 60 will now be described with reference to Fig. 3 and Fig. 4. Fig. 3 is a simplified schematic sectional diagram (along line 3-3 in Fig. 2) showing part of the fascia 12 and lower panel 18, and the main parts of the CPM 60. Fig. 4 is a block diagram illustrating the main elements in the CPM 60. The CPM 60 is a modified version of a conventional cheque processing module, such as the cheque processing module provided with the PERSONAS (trade mark) 5878 NCR ATM.

The CPM 60 comprises the following elements: a cheque input/output transport mechanism 70 including an alignment mechanism for aligning a cheque; a MICR head 72 for reading magnetic details on a code line of a cheque; an imager 74 including an upper 74a and lower 74b CCD camera for capturing an image of each side of a cheque (front and rear); a printer 76 for endorsing a cheque; a storage bin 78 for storing processed cheques, and a reject bin 82 for storing rejected cheques. The transport mechanism 70 includes two divert gates 80a, 80b for diverting cheques to either the storage bin 78 or the reject bin 82. The elements are conventional and will not be described in detail herein. The CPM 60 also includes a controller 86 for controlling the operation of the elements within the CPM 60. The CPM 60 also includes an entrance shutter 88 for opening and closing the cheque input/output slot 56.

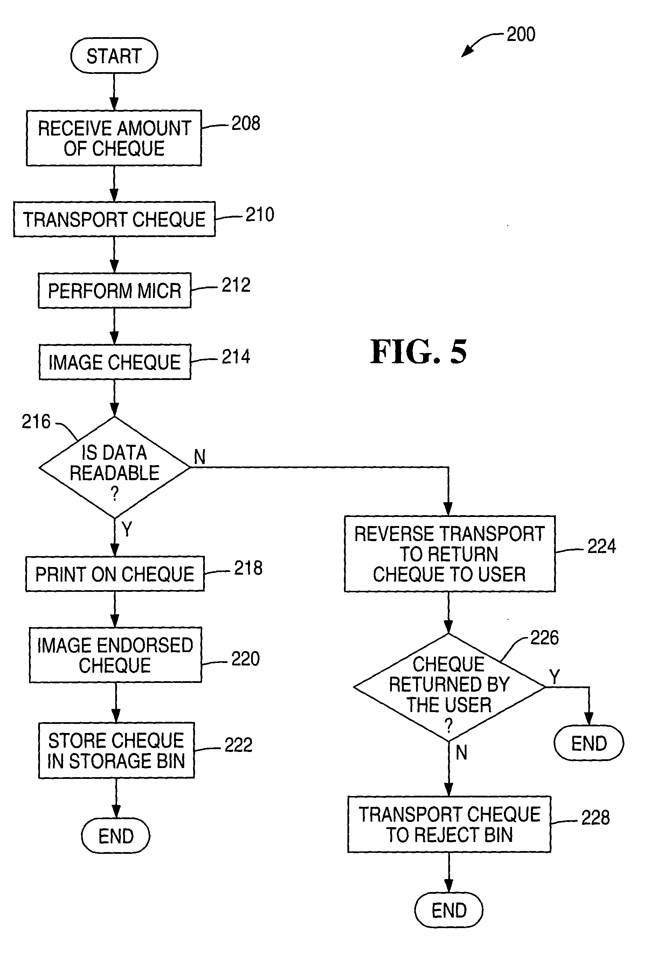

A typical depositing transaction will now be described with reference to Fig. 5 which is a flowchart 200 illustrating the steps involved in a cheque depositing transaction, and also with reference to Figs. 2 to 4. In this transaction, the user enters user identification card into the card reader slot 52, selects "cheque depositing" from a list of transaction options presented on the display 36, enters the amount of the cheque via the keyboard 34, and inserts the cheque to be deposited through the cheque input/output slot 56. The controller 86 receives the amount of the cheque (step 208), and opens the slot shutter 88. The transport mechanism 70 receives the cheque and transports the received cheque (step 210) to the MICR head 72 where a code line on the cheque is read (step 212). The transport mechanism 70 then transports the cheque to the imager 74, where both sides of the cheque are imaged (step 214).

The controller 86 then verifies that data from the codeline and/or the image is readable (step 216). If data from the cheque is readable as determined in step 216, then the printer 76 prints endorsement data onto the cheque (step 218). The cheque is then transported to the imager 74 to image the endorsed cheque (step 220) before it is transported to the storage bin 78 (step 222) for subsequent collection and further processing. Although the above describes both steps 214 and 220 being performed, it is conceivable that only one of these steps be performed. Preferably, step 214 is performed, and step 220 is optionally performed.

If data from the cheque is unreadable as determined in step 216, then a cheque return operation is initiated. When this occurs, the transport mechanism 70 reverses the direction of transport (step 224) to convey the cheque to the cheque input/output slot 56 to return the cheque to the user via the cheque input/output slot. The controller 86 may monitor the slot 56 to ensure that the cheque has been removed by the user (step 226). If the user has not removed the cheque within a predetermined time period, the cheque is retracted and conveyed to the reject bin 82 (step 228).

Although the above-description describes a cheque being deposited in its entire amount by an ATM customer, it is contemplated that the cheque may be deposited only in partial amount of the entire amount of the cheque at the ATM 10a, with the remaining amount of the cheque being cashed and delivered to the ATM customer. Accordingly, it is contemplated that cheque image data may be captured at any type of self-service terminal, such as a cheque depositing ATM, a cheque depositing/cashing ATM, a cheque cashing ATM, or the like, which has cheque-imaging capability.

When a cheque depositing transaction is carried out at the cheque depositing ATM 10a as described hereinabove, transaction data including captured cheque image data associated with the transaction is sent electronically to the consolidation server 100. The server 100 receives the transaction data including cheque image data and stages this data in a database or other storage mechanism. The server 100 stages the data for each transaction carried out at the ATM 10a. The server 100 stages the data in the same manner for each transaction carried out at each of the other ATMs in the network of ATMs 10 shown in Fig. 1.

Transaction data including cheque image data is transmitted from each of the ATMs in the network of ATMs 10 to the server 100 until a trigger event occurs. When the trigger event occurs, the server 100 first consolidates and "batches" all transaction data including cheque image data which has been staged since the last trigger event occurred. The server 100 then sends the consolidated data to a data server associated with the image-based cheque processing system 11 shown in Fig. 1 for subsequent processing at the image-based cheque processing system.

The trigger event which causes the server 100 to consolidate data may occur in a number of different ways. For example, the trigger event may comprise a threshold of a certain number of transactions received from all of ATMs in the network of ATMs 10 shown in Fig. 1. The trigger event may comprise a threshold of a certain number of transactions received from any one of the ATMs in the network of ATMs 10. Other examples include a certain time of day, and a certain amount of time elapsed since the last transmission of consolidated data to data server associated with the image-based cheque processing system 11. The trigger event may occur when a predetermined amount of time has elapsed. For example, the trigger event may occur every half hour.

As another example, the trigger event may comprise a "bin-emptied" event received from an ATM. A signal indicative of a "bin-emptied" event may be generated at either the ATM 10a or the server 100. The "bin-emptied" event indicates that the cheque bin at the particular ATM has been emptied by a courier. It should be noted that the "bin-emptied" event delimits the physical items that the image-based cheque processing system 11 should expect to receive for the day, as will be described in more detail later. The trigger event may comprise a "business day cutover" event which may be a specific time-of-day, for example. The "business day cutover" event may be an external event, such as from an ATM switch, for example. The trigger events described hereinabove are exemplary only. It is contemplated that the trigger event may comprise other trigger events not described above.

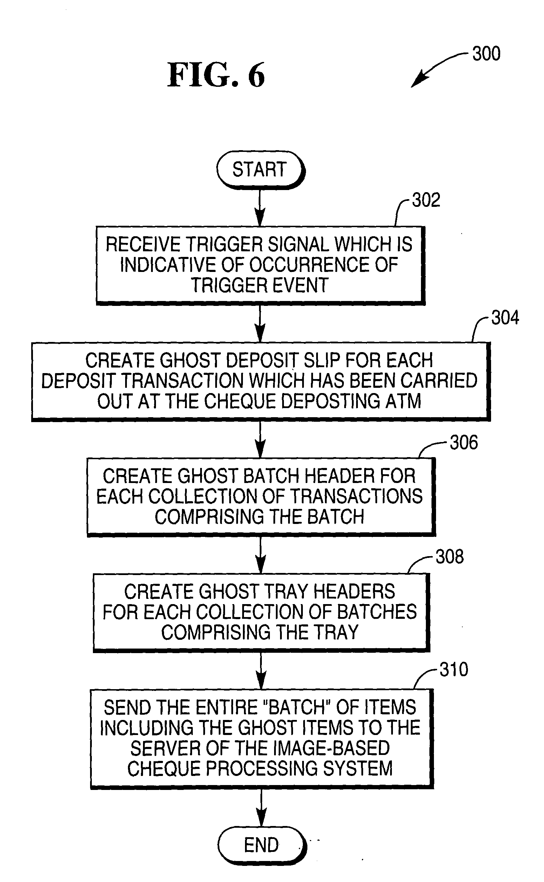

As mentioned, when a trigger event occurs, the server 100 consolidates transaction data including cheque image data which has been staged as described hereinabove and sends the consolidated data to the data associated with the image-based cheque processing system 11 for further processing at the image-based cheque processing system. Referring to Fig. 6, a flowchart 300 depicts steps involved in a transaction data including cheque image data consolidating operation. In step 302, the server 100 receives a trigger signal indicative of occurrence of a trigger event as described in detail hereinabove. Then, in step 304, a ghost deposit slip is created. The ghost deposit slip is a "ghost item" which is an image of a document (in this case of a deposit slip) which physically does not exist. The ghost deposit slip is created from stock image data stored in memory at the server 100, and includes information typical of known physical deposit slips.

More specifically, the ghost deposit slip is a credit and represents the deposit total as declared by an ATM customer for each transaction carried out at the ATM 10a. The amount of the credit should equal the sum of debits declared for each item in the particular transaction (i.e., each cheque and each bunch of cash). The ghost deposit slip contains MICR codeline information which has been added to the image so that this item will appear as if it had been processed through a first pass of items in a back office environment. It should be noted that all ghost items will have corresponding MICR codeline information added to their respective images for this reason. The ghost deposit slip also contains other information including the ATM identification (ATM ID) number, the bank account number, the routing transit number, the transaction sequence number, the date of the transaction, the time of the transaction, etc., for examples. It is contemplated that the ghost deposit slip may include some or all of this information, depending upon specific needs and/or specific requirements of each application.

Similarly, as shown in step 306, a ghost batch header is created. The ghost batch header is also created from stock image data stored in memory at the server 100, and includes information typical of known physical batch headers. More specifically, like an physical batch header, the ghost batch header is used to delineate different batches of work, as is known. A typical batch of work includes approximately up to 300 or so items.

Also, as shown in step 308, two ghost tray headers are created. The ghost tray headers are also created from stock image data stored in memory at the server 100, and include information typical of known physical tray headers. More specifically, like physical tray headers, the ghost tray headers are used to delineate different trays of work, as is known. A typical tray of work includes approximately up to 2500 or so items. The ghost tray headers, for each collection of batches of work, indicates that all items in these batches of work are expected to arrive physically together at the back office facility at which the image-based cheque processing system 11 is located for further processing at the facility. One of the ghost tray headers is associated with ghost items only, and the other one of the ghost tray headers is associated with physical cheque that were deposited.

Ghost batch headers and the ghost tray headers are provided herein for the purpose of managing workflow at a keying and balancing workstation (not shown) which is usually located at the same back office facility at which the image-based cheque processing system is located. The keying and balancing workstation includes an amount keying workstation, a codeline completion workstation, and a balancing workstation. Amounts of items are keyed in at the amount keying workstation, codelines of items are completed at the codeline completion workstation, and items of transactions (i.e., credits and debits) are balanced at the balancing workstation. The structure and operation of keying and balancing workstations and the different workstations within a keying and balancing workstation are well known and, therefore, will not be described.

Although the above describes ghost deposit slips, ghost batch headers, and ghost tray headers being provided, it is contemplated that other ghost items may need to be provided. For example, ghost tracer documents and ghost block headers would need to be provided if the network of ATMs 10 is connected to a host system.

Then, in step 310, the entire "batch" of transaction items including the ghost items created in steps 304, 306, and 308 are electronically transmitted from the server 100 to the data server associated with the image-based cheque processing system 11 for further processing at the image-based cheque processing system. Transaction data including cheque image data associated with transaction items and data associated with the ghost deposit slips are subsequently processed at the image-based cheque processing system 11 in a known manner. As previously mentioned, the ghost batch headers and the ghost tray headers created in steps 306 and 308, respectively, are used for controlling workflow at the keying and balancing workstation.

It should be apparent that when a trigger event occurs as described hereinabove, all associated data is "batched" and sent electronically to the data server associated with the image-based cheque processing system 11 as if all of the paper associated with the batched data were just captured in a "first pass" of cheques through an image-based cheque processing system, such as the image-based cheque processing system 11 shown in Fig. 1, located at the back office facility. Also, it should be apparent that the ghost items (i.e., ghost deposit slips, the ghost batch headers, and the ghost tray headers in this case) make it look as if the corresponding physical items existed and were captured in the first pass through an image-based cheque processing system. Further, it should be apparent that the server 100 formats ATM transaction data (which arrives sporadically and is typically low volume) into a data stream (which is continuous data feed and is typically high volume) ready for further processing in a "second pass" of cheques through the image-based cheque processing system 11 at the back office facility.

Modifications may be incorporated without departing from the scope of the present invention.

## Claims

1. A consolidation server for consolidating cheque image data from a plurality of self-service terminals, the consolidation server comprising:
means for receiving cheque image data from each of the plurality of terminals;
means for staging the cheque image data received from the plurality of terminals in a data storage medium;
trigger means for providing a trigger signal indicative of occurrence of a trigger event;
means for consolidating cheque image data associated with at least one of the plurality of terminals when the trigger signal is provided; and
means for sending the consolidated cheque image data to an image-based cheque processing system for further processing.

2. A consolidation server according to claim 1, wherein the trigger means is arranged to provide the trigger signal indicative of the trigger event when a predetermined number of transactions has been received from, at least, one of the plurality of terminals.

3. A consolidation server according to claim 1, wherein the trigger means is arranged to provide the trigger signal indicative of the trigger event after a predetermined time period.

4. A method of processing cheque image data, the method comprising:
(a) receiving cheque image data from each of a plurality of self-service terminals;
(b) staging cheque image data received from the plurality of terminals in a data storage medium;
(c) consolidating the cheque image data staged in the data storage medium for at least one terminal when a trigger event occurs; and
(d) sending the consolidated cheque image data to an image-based cheque processing system for further processing.

5. A method according to claim 4, wherein the trigger event occurs when a predetermined number of transactions is received from, at least, one of the plurality of terminals.

6. A method according to claim 4, wherein the trigger event occurs after a predetermined time period.

7. A method according to claim 4, wherein the trigger event occurs when a storage bin at one of the plurality of terminals is emptied by a courier.

8. A cheque consolidation network comprising a plurality of self-service terminals, an image-based cheque processing system; and a consolidation server for (i) receiving cheque image data from each of the plurality of terminals, (ii) staging cheque image data received from the plurality of terminals in a data storage medium, (iii) consolidating the cheque image data staged in the data storage medium for at least one terminal when a trigger event occurs, and (iv) sending the consolidated cheque image data to the image-based cheque processing system for further processing.

9. A network as claimed in claim 8, wherein the plurality of self-service terminals comprises a plurality of automated teller machines.
